# DEMANDE DE BREVET EUROPEEN

(11) **EP 1 429 120 A1**
(43) Date de publication de la demande: **16.06.2004**
(21) Numéro de dépôt: 02027477.5
(22) Date de dépôt: 10.12.2002
(51) Int. Cl.: G01F 11/08, G01F 11/28, B65D 1/32, B67D 5/02

(54) **Système de distribution d'un liquide permettant le dosage de plusieurs volumes**

(71) Demandeur: DISTRIFLAC SPRL, 4820 Dison (BE)
(72) Inventeur: Lejeune, Eric, 4820 Andrimont (BE)
(74) Mandataire: Goegebeur, Erik

(57) **Abrégé**

Un système de distribution d'un liquide adaptable à un flacon verseur, permettant le dosage de plusieurs volumes différents par le montage préalable d'un élément doseur adapté au volume choisi le dosage est rendu très précis par un système à sécurité à bille empêchant tout déversement de liquide dépassant le volume pour lequel l'élément doseur a été choisi.

## Description

L'invention traite d'un système de distribution d'un liquide, adaptable à un flacon verseur, permettant le dosage de plusieurs volumes différents par le montage préalable d'un élément doseur adapté au volume choisi. L'invention est appliquée à un type connu de bouteille comprenant un réservoir, un conduit menant au système de distribution et un bouchon de remplissage.

Le système de distribution selon l'invention est relativement simple et permet le dosage de différents volumes en montant préalablement une seule pièce composante (au choix) selon le volume à doser.

Le dosage est rendu très précis par un système de sécurité à bille empêchant tout déversement de liquide dépassant le volume pour lequel l'élément doseur a été choisi.

Le brevet EU 0060060 décrit un système de dosage adaptable à un flacon, qui ne peut doser avec précision qu'un seul volume. Il est seulement possible de faire varier le volume en introduisant une pièce adaptable capable de recouvrir partiellement le volume du réservoir de dosage supérieur. Le système est peu pratique et compliqué car il nécessite l'usage d'un goulot avec une ouverture égale au diamètre intérieur du réservoir supérieur fermé par grand et coûteux bouchon. De plus, la pièce adaptable destinée à recouvrir partiellement le volume de réservoir supérieur est relativement importante et doit être préalablement mise en position, tout en étant impossible à remplacer.

Comme l'écoulement retour du liquide se fait sur le côté du reservoir doseur, la quantité de liquide à verser sera différente selon le sens d'inclinaison lors du retournement du flacon.

Selon l'invention la pipette centrale empêche tout retour du liquide lors du basculement et retournement du flacon.

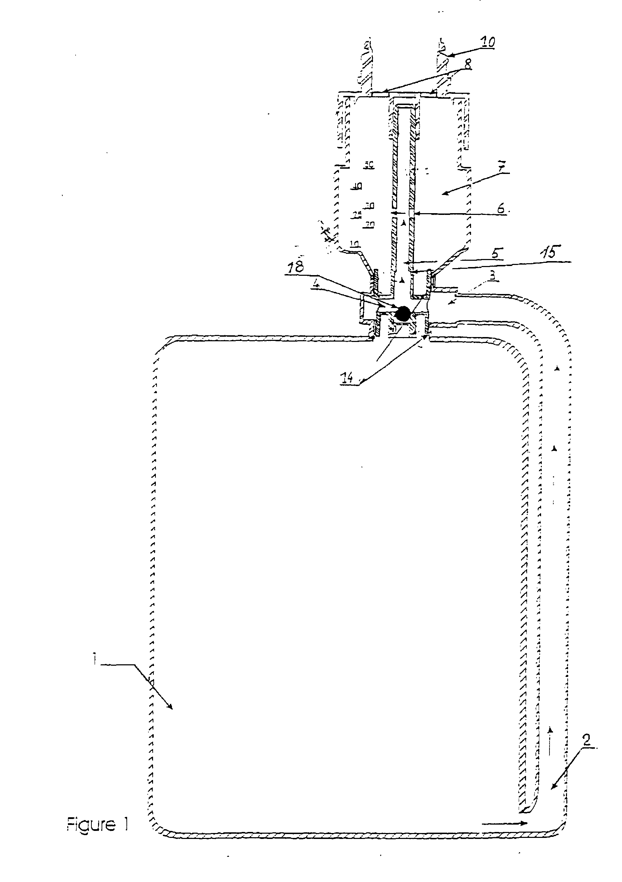

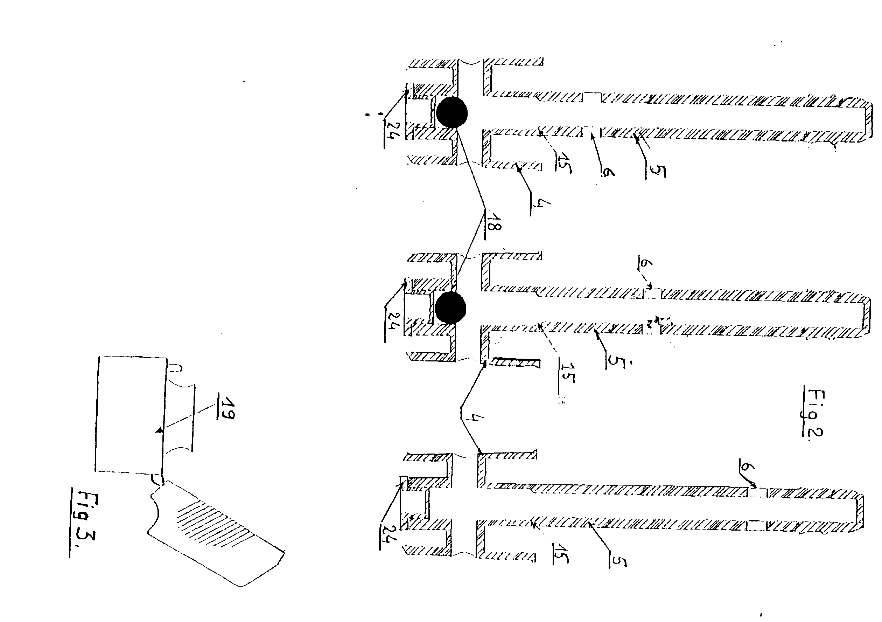

Les caractéristiques du système de distribution selon la présente invention sont illustrées, à titre d'exemple, dans les dessins annexés. La figure 1 montre un flacon pourvu du système de distribution à dosage prédéterminé. La figure 2 montre plusieurs éléments adaptables, calibrés, permettant après montage le dosage de différentes volumes.

La figure 3 montre le montage des éléments adaptables, destinés à assurer le dosage des différents volumes.

Selon la figure 1, le flacon verseur, construit en une matière flexible et résiliente, comporte un réservoir 1 et une conduite latérale 2, débouchant en bas dans le bas du réservoir 1 et en haut dans un goulot 14, séparant le réservoir inférieur 1 du réservoir de dosage supérieur 7. Le réservoir de dosage 7 forme une pièce avec le réservoir inférieur 1, la conduite latérale 2 et le goulot 14, ces quatre composants majeurs du système de distribution étant indémontables.

Dans le réservoir de dosage 7 est placée une pipette doseuse 5, illustrée à la Fig. 2, qui s'étend verticalement en position de dosage. Cette pipette 5 est composée d'un tube cylindrique qui se termine dans le bas par une pièce de jonction 4, fermée en bas par un bouchon obturateur 24. Cette pièce 4 assure la fixation de la pipette 5 dans le goulot 14 et permet le passage du liquide à doser au départ du réservoir 1 par la conduite 2 vers le réservoir doseur supérieur 7.

La pipette doseuse 5 est pourvue vers le bas d'un siège 15 et contient une bille 18 pouvant s'adapter sur le siège 15.

La pipette doseuse 5 est pourvue sur sa partie verticale de deux trous 6, situés à des hauteurs différentes selon le volume à doser. Au plus les trous 6 se situent plus haut au plus grand est le volume dosable.

Selon la Figure 3, la pipette 5 est fixée au bouchon primaire de fermeture 10 du flacon, qui lui-même est fermé par un bouchon auxiliaire 19. Ce bouchon auxiliaire 19 peut être un bouchon à visser ou à clipser avec une ouverture basculante. L'ensemble formé par le bouchon obturateur 24, la pipette 5 et sa pièce de jonction 4, le bouchon primaire 10 et le bouchon auxiliaire 19 n'est introduit dans le flacon qu'après remplissage de celui-ci avec le liquide à distribuer.

Une fois le remplissage effectué, on introduit l'ensemble - bouchons 10, 19, 24 et pipette 5 - dans le réservoir doseur supérieur 7 en le poussant dans le goulot de resserrement 14. L'ensemble du système étant ainsi constitué, on peut passer à l'utilisation du système en effectuant d'abord une pression sur les flancs élastiques et résilients du réservoir inférieur 1. Le liquide, mis sous pression, remonte par la conduite latérale 2 passe par le goulot de resserrement 14 et entre dans le bas de la pipette 5. Le liquide monte dans la pipette 5 jusqu'à ce qu'il atteint les trous 6 par lesquels il s'écoule dans le réservoir de dosage 7. Il est à noter que pendant cette phase d'utilisation du système le bouchon auxiliaire 19 reste ouvert afin de laisser échapper l'air déplacé par la montée du liquide à doser et passé par les ouvertures 8 du bouchon 10. Le liquide passant par les trous 6 de la pipette 5 monte dans le réservoir doseur 7 au dessus des dits trous 6. On arrête la pression sur les flancs du réservoir 1, qui tendent à reprendre leur position originale, en augmentant le volume du réservoir 1. Cette augmentation de volume du réservoir 1 provoque un phénomène d'aspiration du liquide en sens inverse. Le liquide se trouvant dans le réservoir doseur 7, au dessus des trous de sortie 6 de la pipette 5, est ainsi aspiré, disparaît du réservoir 7, redescend dans le réservoir 1 tout en laissant dans le réservoir doseur 7 la quantité de liquide correspondant au volume intérieur du réservoir doseur 7, situé entre les trois de sortie 6 et le fond du réservoir. Lors du déversement du liquide par basculement du flacon permettant le passage de la quantité dosée de liquide resté antérieurement dans le réservoir doseur 7, en dessous des trous de sortie 6, par l'ouverture 8 dans le haut du bouchon primaire 10 et par le bouchon auxiliaire 19 ouvert.

Lors du remplissage du réservoir doseur 7, la bille 18 repose sur le bas de la pièce de jonction de la pipette 5. Lors du retournement du flacon, cette bille 18 vient obstruer la pipette 5 en se mettant sur le siège 15. L'utilisation de cette bille 15 permet d'augmenter la précision du dosage en empêchant tout passage de liquide vers les trous de sortie 6 de la pipette. En effet, une fois que le réservoir doseur 7 est rempli et qu'on relâche la pression exercée sur les flancs du réservoir, et surtout si cette pression a été trop importante, il existe la possibilité qu'un petit surplus de liquide se trouvant dans le tube 2 se déplace lors du retournement vers le réservoir doseur 7 et vienne également se déverser, rendant le dosage imprécis.

Au moment du retournement du flacon, la bille 18 vient se poser sur son siège 15 et dans la pipette 5 et procure une étanchéité au liquide, empêchant celui-ci de parvenir au réservoir doseur 7. Le système permet d'utiliser un flacon standardisé composé d'un ensemble indémontable : réservoirs 1 et 7 et goulot de jonction 4 - tuyau latéral 2, et d'adapter ce flacon à un dosage exact du liquide par l'introduction dans le flacon d'un ensemble doseur pré-assemblé, composé de trois bouchons 10, 19 et 24 et d'une pipette 5. Il est à remarquer que les trois bouchons sont standardisés et que seule la pipette varie selon le volume à doser. Il est ainsi possible pour le fabricant du flacon de livrer un ensemble standard et un choix de plusieurs pipettes, permettant à l'acheteur de monter à grande vitesse et à moindre frais des flacons pourvus du système de dosage. Selon la configuration du bouchon primaire 10, assurant l'introduction de la pipette 5 dans le goulot 4, il est possible d'obtenir ou bien une fixation définitive de la pipette 5 et un dosage fixe, ou d'obtenir l'extraction de la pipette 5, permettant le positionnement d'une autre pipette 5 avec des trous de sortie situés à des hauteurs différentes pour des doses différentes.

## Revendications

1. Système de distribution d'un liquide permettant le dosage au choix de plusieurs volumes, adapté à un flacon élastique et résilient, comportant un réservoir (1), une conduite de transfert (2) par où passe le liquide du fond du réservoir (1) sous pression vers un réservoir doseur (7) en passant par un goulot (4) et une pipette (5) **caractérisé en ce que** cette pipette (5), formant un ensemble avec des bouchons (10, 19, 24), est amovible de l'ensemble du flacon formé par le réservoir principal (1), le goulot (4) et le réservoir doseur (7), **en ce que** cette pipette (5) est pourvue sur sa hauteur de trous de sortie (6) dont l'emplacement est défini par le dosage du volume de liquide à verser, **en ce que** le bas de la pipette (5) est pourvu d'un siège (15) dans lequel peut venir se loger une bille (18) formant une étanchéité.

2. Système de distribution d'un liquide permettant le dosage de plusieurs volumes selon la revendication 1, **caractérisé en ce que** la pipette (5) se trouve en position verticale lors du remplissage du réservoir doseur (7) par pression sur les flancs du réservoir (1), **en ce que** ses trous de sortie (6) laissent passer une quantité à doser du liquide et une quantité excédentaire qui sera évacuée.

3. Système de distribution suivant les revendications 1 et 2 **caractérisé en ce que** plusieurs pipettes (5) sont prévues avec des trous de sortie (6) situés à des hauteurs différents, déterminant ainsi des dosages différents.

4. Système de distribution selon la revendication 1 **caractérisé en ce qu'**il comporte dans le bas de la pipette (5) un siège sur lequel vient se loger lors du retournement une bille (18) assurant l'étanchéité de la pipette (5), empêchant tout retour de liquide lors du retournement du flacon et assurant un dosage très exact du liquide.
